(19) Europäisches Patentamt
European Patent Office
Office européen des brevets

(11) EP 2 773 149 B1

(12) EUROPEAN PATENT SPECIFICATION

(45) Date of publication and mention
of the grant of the patent:
**25.11.2015 Bulletin 2015/48**

(51) Int Cl.:
**H04W 36/24** *(2009.01)*      **H04W 24/10** *(2009.01)*
**H04W 48/16** *(2009.01)*

(21) Application number: **13001007.7**

(22) Date of filing: **27.02.2013**

(54) **Method for optimising mobility management in a cellular network and in a mobile terminal of a cellular network**

Verfahren zur Optimierung der Mobilitätsverwaltung in einem Mobilfunknetz und in einem mobilen Endgerät eines Mobilnetzwerkes

Procédé pour optimiser la gestion de la mobilité dans un réseau cellulaire et terminal mobile d'un réseau cellulaire

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(43) Date of publication of application:
**03.09.2014 Bulletin 2014/36**

(60) Divisional application:
**15162975.5**

(73) Proprietor: **Telefónica Germany GmbH & Co. OHG 80992 München (DE)**

(72) Inventors:
• **Leth-Espensen, Mads**
  **82110 Germering (DE)**
• **Widder, Wolfgang, Dr.**
  **82362 Weilheim (DE)**
• **Müllner, Robert**
  **81479 München (DE)**

(74) Representative: **Herrmann, Uwe et al**
  **Lorenz - Seidler - Gossel**
  **Widenmayerstrasse 23**
  **80538 München (DE)**

(56) References cited:
WO-A1-2010/107448          WO-A1-2010/121418
WO-A2-2012/148229          US-A1- 2003 203 735
US-A1- 2011 177 819

• **CHANDRA C ET AL: "Determination of optimal handover boundaries in a cellular network based on traffic distribution analysis of mobile measurement reports", VEHICULAR TECHNOLOGY CONFERENCE, 1997, IEEE 47TH PHOENIX, AZ, USA 4-7 MAY 1997, NEW YORK, NY, USA,IEEE, US, vol. 1, 4 May 1997 (1997-05-04), pages 305-309, XP010228800, DOI: 10.1109/VETEC.1997.596369 ISBN: 978-0-7803-3659-9**
• **NOKIA CORPORATION ET AL: "Comments to Discussion of MDT privacy requirements (S3-110456)", 3GPP DRAFT; S3-110512_COMMENTS_S3-110546 MDT PRIVACY DISC FIN, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. SA WG3, no. Chengdu, China, 6 April 2011 (2011-04-06), XP050636410, [retrieved on 2011-04-06]**

## Description

The present invention is related to a method for optimising mobility management in a cellular network with at least one mobile terminal. The invention is further directed to a mobile cellular network and a mobile terminal for performing the inventive method.

Mobile networks based on the 3rd Generation Partnership Project (3GPP) standard are deployed all over the world. More than 5 billion subscriptions using the technologies Global System for Mobile Communications (GSM), Universal Mobile Telecommunications System (UMTS) / High Speed Packet Access (HSPA) and Long Term Evolution (LTE) make these technologies to the most popular and most successful mobile network systems worldwide.

Mobility management is one of the major functions of a GSM, UMTS or a LTE network that allows service continuity for mobile phone users while moving within the cellular network.

When a mobile terminal (User Equipment, UE) is switched on, a Public Land Mobile Network (PLMN) is selected and the UE searches for a suitable cell of this PLMN to camp on. The UE will, if necessary, register its presence by means of a Non Access Stratum (NAS) registration procedure in the registration area of the chosen cell. If the UE finds a more suitable cell it reselects onto that cell and camps on it. If the new cell is in a different registration area, location registration is performed (ETSI TS 125 304 V5.2.0, "UE Procedures in Idle Mode and Procedures for Cell Reselection in Connected Mode (3GPP TS 25.304 version 5.2.0 Release 5)", 2002, http://www.etsi.org/deliver/etsi_ts/ 125300_125399/125304/05.02.00_60/ts_125304v 050200p.pdf).

One of the fundamental principles of 3GPP mobility management is the option of moving an ongoing speech call or data session from one cell to another cell via handover or cell reselection. This is necessary to provide seamless service continuity if moving subscribers leave the coverage area of the cell. Handover or cell reselection is triggered if the receive signal level or receive quality fall below certain thresholds or for traffic load reasons.

The handover process can be divided into several parts, namely the measurement, processing, reporting, decision and execution phase. Triggering of handover is usually based on channel measurements consisting of signal level and signal quality. For that purpose measurements are made in uplink and downlink direction. Uplink measurements are performed by the Base Transceiver Station (BTS), UMTS base station (NodeB) or LTE base station (eNodeB). In downlink direction the UE measures and processes signal level and quality of the serving cell and neighbouring cells. Processing is done to filter out the effect of fast fading and Layer 1 measurement/estimation errors using a Layer 3 filter (M. Anas, F. D. Calabrese, P.-E. Ostling, K. I. Pedersen, P. E. Mogensen, "Performance Analysis of Handover Measurements and Layer 3 Filtering for UTRAN LTE", in proceedings of 18th Annual IEEE International Symposium on Personal, Indoor and Mobile Radio Communications(PIMRC'07), http://vbn.aau.dk/files/12841511/ PIMRC2007_Handover.pdf).

In GSM networks, the mobile terminal measures the receive level of the Broadcast Control Channel (BCCH). The measurement results are included in the measurement report that is sent every 480 ms from the mobile terminal to the network. The decision about necessity of handover execution is done in the Base Station Controller (BSC). Before handover execution a channel in the target cell is reserved by the BSC. If this channel reservation is successful, the handover command is sent and the handover is executed (Wikipedia, http://de.wikipedia.org/wiki/Handover).

In UMTS networks handover measurements in downlink direction are based on receive level and receive quality measurements of the Common Pilot Channel (CPICH). The processed measurements are reported to the serving NodeB periodically or event based using Radio Resource Control (RRC) signalling. A handover is initiated if certain decision criteria are met. It is then executed by transferring the UE control to the target cell performing the network procedures with the assistance of the UE (M. Anas, F. D. Calabrese, P.-E. Ostling, K. I. Pedersen, P. E. Mogensen, "Performance Analysis of Handover Measurements and Layer 3 Filtering for UTRAN LTE", in proceedings of 18th Annual IEEE International Symposium on Personal, Indoor and Mobile Radio Communications(PIMRC'07), http://vbn.aau.dk/files/ 12841511/PIMRC2007_Handover.pdf)

The first phase in the handover process covers the cell identification. The cell identification depends mainly on the number of cells and multipath components that the UE can receive. The UE needs to check every peak in its matched filter. The fewer peaks there are the faster is the cell identification. The cell identification time depends on the number of multi paths, number of cells within the detection range, number of already found cells and size of the neighbour list (H. Holma, A. Toskala, 'WCDMA for UMTS: HSPA Evolution and LTE", 5th Edition, 2010, John Wiley &Sons, ISBN: 978-0-470-68646-1, http://eu.wiley.com/WileyCDA/WileyTitle/productCd0470686464.html.).

Some 3GPP performance requirements specified in the respective standard (3GPP TS 25.133 V9.2.0, "Requirements for support of radio resource management (FDD) (Release 9)", 2009, http://www.3gpp.org) are: The UE needs to be able to report the measurements within

 (a) 200 ms from an already identified cell
 (b) 800 ms from a new cell in the neighbour list (monitored set) and
 (c) 30 s from a new cell outside the neighbour list (monitored set).

In the second phase the UE decodes the system frame number from Broadcast Channel (BCH) that is transmitted on the Primary Common Control Physical Channel (P-CCPCH). Before the pilot power (Ec) to the total cell power (Io) (Ec/Io, receive quality) is used by the active set update algorithm in the UE, some filtering is applied to make the results more reliable. The measurement is filtered on both Layer 1 and on Layer 3. The Layer 3 filtering can be controlled by the network. The handover measurement reporting from the UE to Radio Network Controller (RNC) can be configured to be periodic, as in GSM, or event triggered.

The neighbourhood list includes intra-frequency cells, inter-frequency cells, GSM cells and LTE cells.

In LTE handover measurements are done at the downlink reference symbols. The UE measures the Received Signal Strength (RSS) which includes path loss, antenna gain, log-normal shadowing and fast fading averaged over all the reference symbols within the measurement bandwidth. Filtered handover measurements of receive level and quality are updated every handover measurement period at the UE (M. Anas, F. D. Calabrese, P.-E. Östling, K. I. Pedersen, P. E. Mogensen, "Performance Analysis of Handover Measurements and Layer 3 Filtering for UTRAN LTE", in proceedings of 18th Annual IEEE International Symposium on Personal, Indoor and Mobile Radio Communications (PIMRC'07), http://vbn.aau.dk/files/12841511/PIMRC2007_Handover.pdf)

Prior art document US-A1-2011/0177819 discloses a method for improving network performance during a signal related handover decision, and teaches triggering measurement of received power levels of the broadcast channels received from a plurality of base station at a pre-determined time, storing the received power level in the received power level memory unit and checking d whether measurement results met the requirements for a conventional handover procedure.

The general problem is the long duration of cell identification in the handover measurement procedure including frequency scanning and measurements done by today's GSM, UMTS/HSPA and LTE terminals.

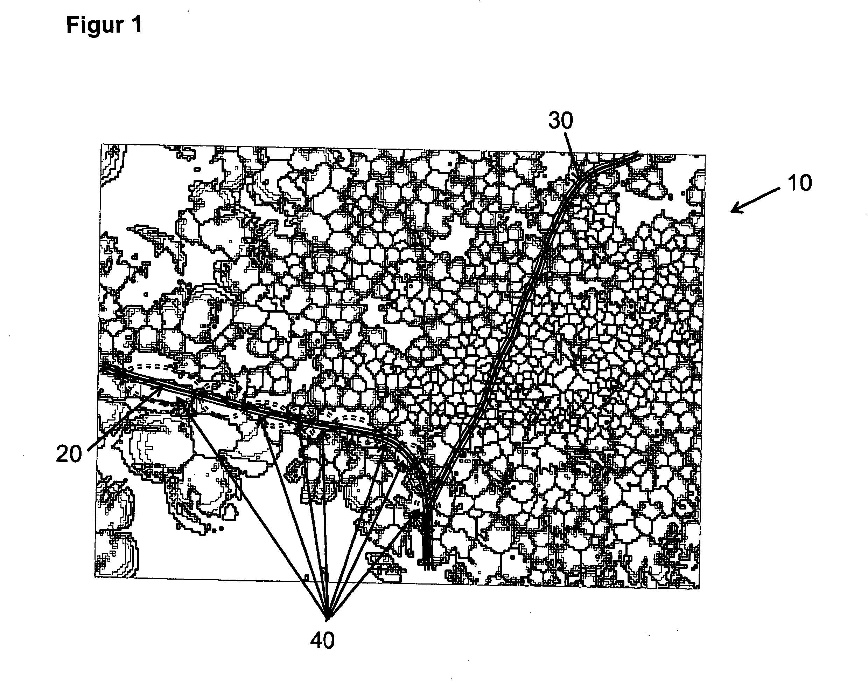

Figure 1 shows a coverage plot for suburban and urban areas in an UMTS/HSPA live network. The network plot 10 indicates coverage ranges in which a specific minimum indoor receive level is achieved. Coverage is provided in the whole area, i.e. the minimum outdoor receive level requirements for mobile speech and data services is granted. Different section linings indicate areas of higher receive levels in steps of 2 dB each. These graduations have been selected for a better visualisation of the cellular system consisting of a high number of cells. Two main routes 20 and 30 are plotted representing roads. In another example the routes could also represent railway lines or in a smaller extent pedestrian zones.

Dashed circles 40 in Figure 1 represent the coverage area of cells along the main route 20. On the way along this route from the bottom of the map towards the left border of the map a moving subscriber changes from one coverage area to the next. In case of an ongoing circuit-switched speech call the connection is handed over from one cell to another cell while the connection continues with interruption times more or less noticeable by the users. The target is to keep these interruptions in all network technologies as short as possible. This is a challenging task for network planning done by mobile network operators but also for manufacturers of mobile network systems and 3GPP standardisation.

Mobile operators deploy large coverage cells especially at motorways and railway lines to keep the number of cell changes low. This is achieved by using high output power and antennas with a small beam width. The implied trade-off between coverage, capacity and quality is a specific task for network optimisation. With this option the number of interruptions by handover can be reduced but not their interruption time.

A comparable situation exists for cell reselection for packet-switched data services. Packet-switched data services are characterised by their burst structure including short data transmission periods interrupted by pauses of no data transmission. When camping on a cell measurements to identify better suited cells are triggered if the receive level or receive quality falls below a specific threshold, e.g. Received Signal Code Power (RSCP) < -113 dBm and Received Energy per Chip divided by the Power Density in the Band (Ec/No) < - 8 dB for UMTS networks.

For handover and cell reselection standard procedures according to the current state of technology are applied. Drawback of these procedures is the relatively long duration for cell identification, including frequency scanning and measurements.

It is the object of the present invention to provide a method for optimising mobility management in a mobile cellular network, in particular in order to reduce the time for cell identification and thus speed up the handover and cell reselection procedures.

The object is solved by a method according to claim 1. Preferred embodiments are subject of the dependent claims.

According to the invention measurement data collected during a regular handover and/or cell reselection procedure is stored in a database for future reuse. For example, during the measurement phase of a conventional handover or cell reselection procedure a mobile terminal identifies all relevant frequencies and for UMTS networks also scrambling codes within its reception area and measures their signal level and quality in downlink direction. The resulting signal relevant data of each measured frequency/cell is now stored for future reuse.

In UMTS Cell_DCH mode the mobile terminal permanently transmits or receives data and there is no opportunity to scan other UMTS, GSM or LTE frequencies to search for suited neighbouring cells. If the subscriber moves towards the coverage edge of the UMTS cell or if in its adjacency other UMTS cells use different frequencies, the mobile terminal can be notified by the network to switch to compressed mode. In compressed mode transmission is suspended for specific intervals to allow the mobile terminal to perform neighbour cell measurements. The measurement reports are transferred to the network. The latter takes decision about handover. It is the scope of the described invention to use measurement from the past to accelerate target cell selection.

In contrast in Cell_FACH state mobility management is performed by the mobile terminal and not by the network. If the mobile terminal identifies that another cell is better suited for connection to the network, cell change is autonomously performed by the mobile terminal. A notification has to be sent to the network that from then on all data are sent to the new cell.

It is important to note that in GSM networks using traditional frequency planning, different frequencies are used in neighbouring cells. To reduce interference in the network the same frequencies are only reused after a specific minimum distance, i.e. cells using the same frequencies are separated and other frequencies are used in the cells between them. In tight reuse GSM networks the same frequencies might be reused in neighbouring cells but measures are taken to avoid collisions in the frequency and time domain.

In UMTS networks frequencies are reused in adjacent cells but different scrambling codes are used. To each cell exactly one set of scrambling codes is assigned for cell coding in downlink direction. It is the task of cell planning to distribute these sets in such a way that neighbouring cells do not use the same set of scrambling codes for avoiding mutual disturbances. In this way each cell is uniquely characterised and distinguishing between neighbouring cells is possible.

The decisions about handover and cell reselection are event-based. An Active Set, a Monitored Set and a Detected Set of cells are used and intra-frequency, inter-frequency and inter-Radio Access Technology (inter-RAT) handovers are performed. The user terminal is informed from the network about the event configuration. If for one event candidates are identified, a measurement report is sent from the user terminal to the network and the network generally decides about handover or cell reselection.

For the sake of simplicity the following text describes the generation of a frequency list that is used by the user terminal to measure receive level and/or quality of signals on these frequencies. This is done because the user terminals perform the downlink measurements on these physical frequencies, while assignment of frequencies to specific cells is generally done by the network. For UMTS networks, although not explicitly stated in the following description, the term frequency is always related to the combination of a frequency and a specific scrambling code used in this cell.

According to the current state of technology, the measurements performed by the mobile terminal are only used for an actual handover or cell reselection procedure. These measurement results are discarded after execution of the handover or cell reselection. The intrinsic idea of this invention is to store this information and to reuse it for any future mobility management procedure. For example, said stored data can be used for accelerating future handover and cell reselection procedures, in particular for speeding up the frequency identification.

In another preferred embodiment of this invention data in the local and global database are used by roamers for PLMN selection.

The inventive idea is applicable for all existing cellular network topologies or respective communication standards, in particular GSM, UMTS/HSPA, LTE and future standards.

Preferable, said data is stored within a local data base which is physically or logically connected to the respective mobile terminal. Particular preferable, the local database is located at or integrated into the mobile terminal. It is advantageous to have at least one separate local database to each of the mobile terminals supplied by the mobile cellular network.

Additionally or alternatively, the measurement data is conveyed to and stored in a global database accessible by all or at least some of the mobile terminals or rather the local databases. Local and global database can be logically or physically connected for data exchange.

Local databases might comprise temporary storage media with limited storage capacity. Global database might be long term storage medium.

According to one aspect of the invention at least one local and at least one global database are periodically and/or event triggered and/or in real time synchronized. Event triggered means that a synchronisation procedure is performed when an event occurs which requires access to the data stored in the local and/or global database. For instance, synchronisation might be triggered at the beginning of a handover and/or cell reselection procedure.

Real time synchronisation means that a synchronisation procedure is executed each time or mostly each time new data is stored and/or stored data is changed within the local and/or global database.

In a preferred aspect of the invention additional information is stored together with at least some or all measurement data, for instance physical information and/or quality information or event related data can be stored within the database.

It is conceivable that physical information includes at least one geographical coordinate of the current position of the mobile terminal. Position information is preferably determined by a GPS or GALILEO component of the mobile terminal and stored together with the measurement data. In particular, measurement data is stored with reference to the geographical position at which the measurement data was captured.

Further additional information includes the present time of the measurement and/or the currently used radio access technology. It is important to store the currently scanned frequency and/or the currently used scrambling code together with the measurement data. Further, data to be stored can contain information about the current best server.

Quality related information determined in active mode which might also be stored refers to the used speech codec and codec mode and/or the used modulation and coding scheme and/or the frame or block error rate.

Event related information can contain information about the current event which triggers a measurement procedure according to the present invention. Possible triggering events are a handover and/or cell reselection and/or a coverage hole and/or a call drop and/or a rejected call establishment attempt and/or rejected data session establishment attempt due to blocking.

Consequently, the local and/or global data base comprise information about the service quality of specified cells at specific coordinates within the mobile cellular network.

According to a particular aspect of the invention the network and/or the stored data is reused for a future handover and/or cell reselection and/or PLMN selection procedure. For instance, means are integrated into the mobile user terminal or located at the system access side to analyze the stored measurement data. By analyzing the stored data a frequency list is derived which contains possible frequencies in the neighbourhood of the respective processing mobile terminal and their level and/or quality at this instant. These frequencies and for UMTS networks the used scrambling code might be relevant for a possible handover and/or cell reselection procedure. The generated list is based on former measurement results and experiences of the processing and/or any other mobile terminals. Regularly, said generated list contains a smaller number of frequencies for a handover and/or cell reselection procedure than a conventional neighbour list normally used for standard handover or reselection procedures. Therefore, the time needed for frequency identification can be noticeable reduced.

The frequency list is preferably derived from a measurement performed by this and/or any other mobile terminal in the past.

For instance, the frequency and scrambling code list is generated by comparing the geographical coordinates of the mobile terminal performing a handover and/or cell reselection to the stored measurement data. Therefore, the frequency list provides a number of cells/frequencies at a given geographical position which might perform best for a subsequent handover and/or cell reselection procedure.

The list is generated from

(a) Measurements done by the considered user terminal and stored in the local database. This aspect is useful as the mobility of a typical subscriber frequently covers same routes at different days, for example on the daily way from home to work and back again. To provide this information to a plurality of subscribers, the measured data can be conveyed from the local to a global database. If no information about preferred frequencies for the current geographical location of the subscriber is available in the local database or its content is out-of-date, for example due to change of the frequency plan by the network operator, the proposed frequency and scrambling code list can be requested from the global database.

(b) Measurements of other mobile terminals that conveyed the data from their local database to the global database. Data are then transferred from the global database to the local database of any other mobile terminal.

According to another aspect of the present invention the mobile terminal starts measuring the receive signal level and quality for all or at least some of the frequencies included in said frequency list during a handover and/or cell reselection procedure.

According to another preferred aspect of the present invention the measured and filtered receive signal level and quality for each frequency or frequency and scrambling code combination of the frequency list is compared to at least one defined target threshold when handover or cell reselection or PLMN selection is triggered. If the receive signal level and signal quality exceed the least one thresholds the cell of the identified frequency shall be used as a target cell for a handover and/or a cell reselection procedure. Preferable at least one threshold is defined for the signal level and at least one for the signal quality. In particular, both thresholds have to be exceeded to fulfil the requirements of a handover and/or cell reselection procedure.

If in case of handover or cell reselection or PLMN selection more than one frequency fulfils the at least one requirement it is reasonable to select the best suited frequency. For instance, all or at least some of these suitable frequencies are ranked. It is possible that the ranking process weights signal level and quality criteria and selects the best frequency due to their respective criteria score. Note that for UMTS networks always the combination of frequency and scrambling code has to be considered.

The decision for an appropriate frequency can be made autonomously by the mobile terminal and/or after consultation with the mobile cellular network or rather the respective processing means within the network.

In case that none of the frequencies included in the frequency list fulfils the at least one requirement it is conceivable that the measuring procedure is extended to a higher number of frequencies or scrambling codes. For instance, it is possible to revert to the conventional cell neighbour list which is used during a handover procedure known from the state of the art.

According to a preferred aspect of the invention the stored measurement data is used in a situation in which a conventional handover procedure fails. In that case the decision for any of the identified frequencies/cells is made autonomously by the mobile terminal itself and it informs the network about the preferred frequency and/or scrambling code. This allows continuity of an ongoing call or data session that might be dropped or interrupted without an autonomous decision of the mobile terminal.

According to another preferred aspect of the invention a conventional neighbour list is compared to the generated frequency list derived from the stored data during a handover or cell reselection procedure. In that case measurements of the received signal level and quality of neighbouring cells are performed by the mobile terminal only for matching frequencies.

Alternatively, it is also possible that the mobile terminal ranks the frequencies and/or scrambling codes to be scanned dependent on the comparison result between a conventional neighbour list and the generated frequency list. Preferable, the scanning order is modified wherein matching frequencies are favoured for the measurement procedure of adjacent cells.

It is also possible to suspend the measurement procedure if at least one or a defined number of frequencies which fulfil the requirements have been discovered.

Receive signal level and quality are measured for the matching frequencies in the given order. The cell of an identified frequency shall be proposed as a target cell for handover or cell reselection or PLMN selection if the respective signal level and quality exceeds at least one defined threshold.

It is another preferred aspect of the invention when said measured data collected by at least one mobile terminal is used for network optimisation processes, especially network planning and handover parameter optimisation. The local and/or global data base is preferable connected to a network planning database and all relevant information for network planning is transferred to the network planning database, especially data about receive signal level and quality for the corresponding frequency at a given geographical position. The transferred information might be automatically used for identifying areas with poor coverage or poor quality and/or areas of frequent call or data session drops.

The invention is further directed to a mobile cellular network comprising means for performing the method according to the present invention. The same advantages obviously result from such a mobile cellular network which were presented further above with respect to the inventive method. In particular, the network comprises a global database which is accessible by at least one mobile user terminal or at least one local database integrated into or connected to at least one mobile user terminal. Further advantageous, the network comprises a network planning database which is logically or physically connectable with the global database.

In a preferred embodiment of this invention a small computer program in the mobile terminal (App) is used to optimise data for the geographical environment frequently resided by the user. Data collection is started after pressing a start button of this App. During the subscriber's move frequencies and scrambling codes of the best suited neighbouring cells are identified and data collection is terminated by manually pressing a stop button of the App. The user-initiated recording of data is beneficial especially for cells for which the target cell predefined from network side is not the best choice, e.g. a tunnel cell on a motorway might not be the best choice for a pedestrian in a town close to the motorway.

This user-initiated procedure represents a pull-service, whereas the network initiated procedure is executed as a push-service.

The invention is furthermore directed to a mobile terminal comprising means for performing the method according to the present invention.

The present invention will now be described in more detail with reference to an embodiment and to the drawings. There are shown:

Figure 1: a coverage plot for suburban and urban areas in an UMTS/HSPA live network,

Figure 2: a mobile network according to the invention based on the 3GPP standard,

Figure 3: an example for data storage according to the present invention and

Figure 4: a flow process diagram according to a preferred embodiment of the inventive method.

The basic idea of this invention is to substantially reduce the duration of handover or cell reselection or PLMN selection measurements by using additional information stored in local databases in the UEs and in external global databases.

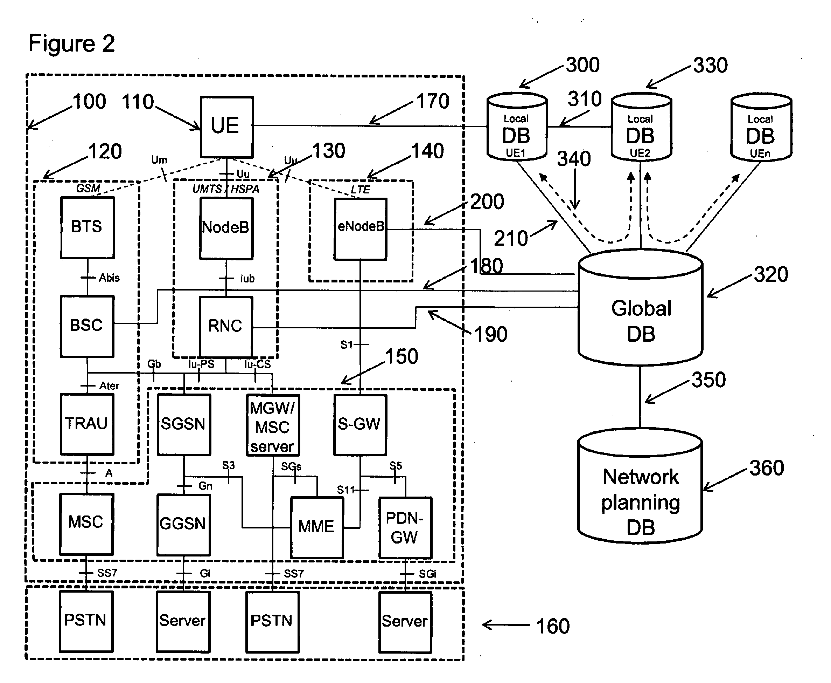

Figure 2 shows a mobile network 100 based on the 3GPP standard. The UE 110 is connected via the air interface to the radio access network based on the technologies GSM 120, UMTS/HSPA 130 or LTE 140. The solid line between the UE 110 and the UMTS/HSPA radio access network 130 indicates that the UE 110 is currently served by the UMTS/HSPA network, while a change of the Radio Access Technology (RAT) is possible indicated by the dashed interfaces between the UE 110 and the GSM 120 or LTE 140 network.

The radio access networks 120, 130 and 140 are connected to the core network 150, which is connected to the Public Switched Telephone Network (PSTN) for circuit-switched services and to servers in the Internet for packet-switched services 160.

In order to accelerate the handover measurement phase, scanning of frequencies and measurements of the receive signal level and quality in downlink direction shall start for a predefined set of frequencies, and where applicable scrambling codes (UMTS). The coded number of this predefined set for given geographical information shall be taken from the local database. The memory of the databases shall be filled with information collected by the UEs.

The receive level and quality measurements executed by the UE 110 shall be stored in the local database 300. Additional data shall be recorded. For each instance the following information shall be captured and stored together with the measurement results:

Physical information:

- Geographical coordinates about the position of the UE 110: Preferably determined via Global Positioning System (GPS) or similar technologies like GALILEO.
- Time: Actual time to identify out-of-date information during post-processing.
- Radio access technology: GSM, UMTS/HSPA, LTE or others.
- Scanned frequency: Coded frequency number of the used radio access technology.
- Scrambling code (UMTS/HSPA).
- Receive level.
- Receive quality.
- Best server.

Quality related information in active mode:

- Used speech codec and codec mode: e.g. Adaptive Multi-Rate (AMR-NB) Full-Rate (FR) 12.2 in GSM or AMR12.2 in UMTS/LTE.
- Used Modulation and Coding Scheme (MCS) / coding rate: e.g. MCS-9 in Enhanced General Packet Radio Service (E-GPRS) or 16 Quadrature Amplitude Modulation (QAM) in HSPA or 64QAM with coding rate 2/3 in LTE.
- Frame error rate / block error rate: Average value for evaluating speech quality and data quality.

Events:

- Handover / cell reselection.
- Coverage hole.
- Call drop.
- Rejected call establishment attempts and data session establishment attempts due to lack of physical resources (blocking).

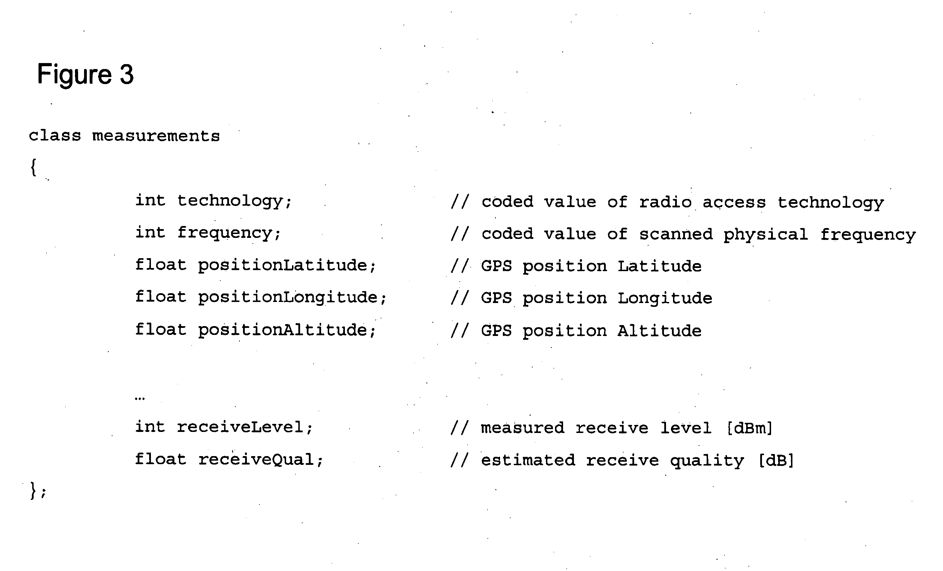

An example for data storage is shown in Figure 3. The data shall be temporarily stored in a database 300 of the UE 110 shown in Figure 2. The interface 170 is a logical connection between the UE 110 and the UE related database 300, the database is preferable located within the UE 110.

As the capacity of the memory of the UE 110 is limited, these data shall be transferred from the local database 300 of the UE 110 to a global database 320 in the network. Thus this information can also be provided to other subscribers accessing the global database. The locally stored data are preferable transmitted via the air interface Um, Uu to the radio access network and from the BSC (GSM) via the interface 180, from the RNC (UMTS/HSPA) via the interface 190 and from the eNodeB (LTE) via the interface 200 to the global database 320. The global database 320 can be physically integrated into any of the nodes, preferable into the BSC, RNC or eNodeB. Alternatively, the global data base 320 is realised as an external device that is logically connected to any of the network entities.

The information measured by a second mobile terminal UE 330 and locally stored in its database shall also be transferred via the air interface and the radio access network to the global database 320. Via this procedure an exchange of information between mobile terminals is possible. The logical interface 340 shows this procedure, the physical interfaces between UE1 and UE2 are the 3GPP air interfaces Um and Uu, the 3GPP interfaces in the radio access network Abis (GSM) and lub (UMTS/HSPA) and the interfaces 180, 190 and 200 for the interconnection of the radio access networks 120, 130 and 140 with the global database 320. Exchange of data shall preferably be done via an application for mobile terminals (App).

In another embodiment of this invention an exchange of data stored in the local database of one UE, e.g. of UE1 (300), to the local database of another UE, e.g. of UE2 (330), is done via any physical or logical interface. Direct data exchange is preferable done via the interface 310 using infrared, Bluetooth or USB as physical medium. Also data recorded via the App can be exchanged via these media. Indirect data exchange is preferable done via the 3GPP air interface and the mobile network nodes Operation and Maintenance Center (OMC) or Network Management Center (NMC) that controls the network entities.

The global database 320 is preferable connected via the interface 350 to a network planning database 360 for the exchange of frequency numbers, used scrambling codes and related physical and quality related information.

The use of the stored information for optimising search criteria for mobility management is explained in the following:

According to one embodiment the stored information shall be used for the optimisation of search criteria for cell change. Based on the geographical information of the current position of the user, not the higher number of frequencies defined in the neighbourhood list by 3GPP for the used technology and other accessible access technologies shall be scanned. Instead of applying the 3GPP standard procedure a list consisting of a lower number of proposed frequencies, and where applicable scrambling codes, shall be generated from information of the local database 300.

For consistency reasons the contents of the local database 300 shall be continuously synchronised with the global database 320. This allows that up-to-date information is available in the local database 300 when this information is required to accelerate neighbourhood cell identification. Thus, a time consuming query of the global database 320 is avoided. For this purpose data shall be sent from the global database 320 via the radio access network and the air interface to the mobile 110 and its local database 300 whenever changes occur and transmission capacity is available.

The generated list from the local database 300 shall include a low number of frequencies and, where applicable scrambling codes, that are identified to be used in the surroundings of the current position of the user based on the data of the past stored in the local 300 or global database 320. The UE 110 shall then start the measurements of the receive signal level (GSM, UMTS/HSPA and LTE) and receive signal quality (UMTS/HSPA, LTE) only for the frequencies and scrambling codes (UMTS) defined in this list. If receive signal level and quality exceed configurable thresholds, the best suited frequency shall be selected. In case that a cell change is triggered the identified target cell shall be used with preference. Only in case that receive level and quality do not fulfil the requirements, the measurements shall be extended to other frequencies according to the standard procedure.

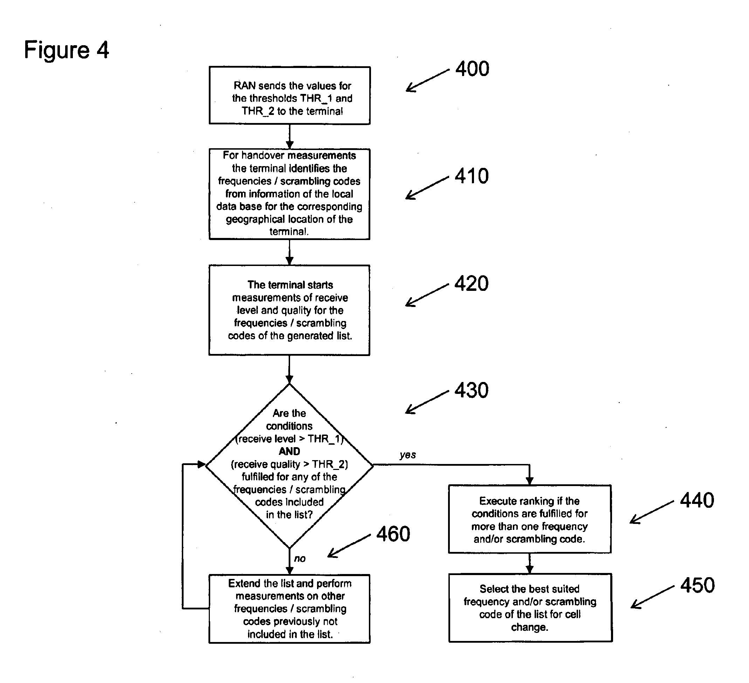

The algorithm used for this procedure is described in Figure 4. The UE is informed by the Radio Access Network (RAN) about the thresholds THR_1 for the minimum receive level and THR_2 for the minimum receive quality requirements. This step 400 can be executed on event base, e.g. during the login procedure to the network or periodically, e.g. as broadcast message. Changes in the 3GPP standard are required, i.e. the thresholds THR_1 and THR_2 have to be defined and the way of sending the message as broadcast information or dedicated signalling. Furthermore, reaction of the UE 110 after reception of the message has to be defined.

For handover measurements the terminal 110 identifies the frequencies and scrambling codes (UMTS) from information of the local database 300 for the corresponding geographical location of the terminal in step 410. Instead of scanning a higher number of frequencies according to the 3GPP procedure the UE 110 starts in step 420 measurements only for the frequencies and scrambling codes included in the generated list.

Step 430 defines via an if-condition whether to extend neighbourhood cell search or to stop the measurements and select one of the frequencies included in the generated list. If both conditions are fulfilled for at least one of the frequencies included in the generated list, i.e.

(receive level> THR_1) AND (receive quality> THR_2),         (equation 1)

the target is achieved. If the conditions are fulfilled for more than one frequency, a ranking of the frequency candidates shall be executed in step 440. The ranking process shall weight level and quality criteria and the frequency for which the overall score is highest shall be selected. This is the best suited frequency or frequency and scrambling code combination to be used for cell change according to step 450. The selected frequency or frequency and scrambling code combination is reported to the network for handover or cell reselection decisions.

If the conditions in equation 1 are not fulfilled for any of the frequencies included in the generated list scanning of frequencies or frequency and scrambling code combinations shall be extended according to the procedure based on the current status of technology. This step is described in 460. This procedure shall be executed each time scanning of frequencies is done by the UE 110.

In another embodiment of this invention scanning of frequencies is done autonomously by the UE 110 using data stored in the local database 300 in Figure 2 or sent via a dedicated data connection from the global database 320 to the local database 300. This solution does not require changes in the 3GPP standard but software modifications of the mobile terminals 110. The thresholds THR_1 and THR_2 can be hard coded in the memory of the UE 110 and/or configured during software installation by the operator before selling the UE 110 to subscribers or they can be transferred from the network to the UE 110 via dedicated data connection.

In another embodiment of this invention, the UE 110 ranks the frequencies to be scanned according to the information stored in its local database 300 or received from the global database 320 and changes the sequence of frequencies or frequency and scrambling code combinations (UMTS) for which receive level and receive quality measurements are performed. In this embodiment the UE 110 starts the standard process for scanning frequencies. If information about measurements at given location are available, the UE 110 first performs measurements for these frequencies, i.e. the ordering of the frequency list is modified. If suited frequencies or frequency and scrambling code combinations are identified, i.e. the condition in equation 1 is fulfilled, the identified frequency or frequency and scrambling code combination shall be proposed for cell change.

Consistency of data stored in the database 300, 320, 330:

Data shall be continuously updated. As network operators change the frequency plan from time to time, the measurement time shall be used to identify out-of-date information in case of conflicting entries.

Autonomous decision in case of failures of network based decisions:

In another embodiment of this invention the UE 110 performs autonomously decisions about the selected target cell if the procedure of network based decision for handover or cell reselection fails. This allows continuity of the call that might have been dropped without using the procedure described in this invention.

In another embodiment of the invention the information stored in the databases 300 and 320 in Figure 2 can be used for network optimisation. For this purpose the global database 320 is connected via the interface 350 to the network planning database 360. All information relevant for network planning shall be transferred via this interface, i.e. especially data about receive level and quality for the corresponding frequency at given geographical position. This information shall be used to optimise network planning by identifying areas of poor coverage or poor quality, areas of frequent call drops and for handover parameter optimisation.

The benefit of the invention is the reduced time for scanning frequencies and executing the related level and quality measurements. This allows for an earlier identification of frequencies or frequency and scrambling code combinations (UMTS) for cell change, i.e. the scan of frequencies is stopped if the level and quality measurements of at least one frequency fulfil the minimum conditions defined by THR_1 and THR_2. Note that for GSM networks only receive levels are scanned, i. e. THR_2 is not used in GSM.

Another important aspect is saving of connections that would be dropped if the network defined procedure applied according to the current state of technology fails.

Further benefit is provided for network optimisation by keeping data that are discarded according to the current state of technology and using them for network planning aspects. This invention can be applied to all cellular communication systems, not necessarily restricted to the 3GPP standards GSM, UMTS/HSPA and LTE.

**Claims**

1.  A method for optimising mobility management in a cellular network with a least one mobile terminal wherein the mobile terminal performs the steps:

    i. measuring at least one receive signal relevant parameter, in particular the receive signal level and/or receive signal quality, during a handover and/or cell reselection procedure for a number of cells, in particular for all neighbouring cells and/or the serving cell,
    ii. combining these data with information about the physical frequency on which they were determined, and where applicable with the used scrambling code,
    iii. storing said measurement data in a database for future use
    **characterised in**

**that** the network and/or the user terminal accesses and analyzes the stored measurement data for generating a frequency list including relevant frequencies, and where applicable scrambling codes of neighbouring cells of the respective mobile terminal, for a possible handover and/or cell reselection procedure and/or PLMN selection.

2. The method of claim 1 wherein said measurement data is stored in a local and/or global database and preferable the local and global databases are periodically and/or event triggered and/or in real time synchronized.

3. The method according to claim 2, wherein at least one local database is assigned to each mobile terminal and the global database is accessible by each mobile terminal or rather each local database.

4. The method according to any one of the preceding claims wherein additional information is stored together with the measurement data, for instance information about the current geographical position of the mobile terminal and/or the current time of the measurement and/or the currently used radio access technology and/or the currently scanned frequency and/or the currently used scrambling code and/or the current best server and/or any quality related information in active mode and/or information about the event triggering the measurement.

5. The method according to any one of the preceding claims wherein said stored measurement data and/or said additional information stored in the local database is used by a respective mobile terminal for possible handover and/or cell reselection procedures and/or by a roaming mobile terminal for PLMN selection.

6. The method according to any of the preceding claims wherein the frequency and scrambling code list is derived from a measurement performed by this and/or any other mobile terminal in the past.

7. The method according to any of the preceding claims wherein measurements performed by a mobile terminal and stored in its local database are transferred preferably via the air interface to the mobile network and stored in a global database that is connected to network entities of the mobile network.

8. The method according to any of the preceding claims wherein relevant data are transferred from the global database preferably via the air interface to a plurality of mobile terminals.

9. The method according to any of the preceding claims wherein relevant data are transferred from the local database of one terminal to the local database of another terminal via any physcial or logical interface.

10. The method according to any one of preceding claims wherein during a handover and/or cell reselection procedure and/or PLMN selection the mobile terminal starts measuring the received signal level and quality on all or at least some of the frequencies, and where applicable scrambling codes included in said frequency list.

11. The method according to claim 10 wherein the measured received signal level and quality for each frequency of the frequency list, and where applicable frequency and scrambling code combination, is compared to at least one target threshold pair and if the received signal level and signal quality exceeds the least one pair of thresholds the cell/PLMN of the identified frequency and, where applicable scrambling code, is proposed as a target cell for a handover or a cell reselection procedure or as a target PLMN for roaming.

12. The method according to claim 11 wherein the best suited frequency or frequency and scrambling code combination is selected if more than one candidate fulfils the at least one requirement, in particular by ranking the suitable frequencies, and where applicable frequency and scrambling code combinations and selecting the best frequency or frequency and scrambling code combination dependent on weighted level and quality criteria.

13. The method according to claim 11 wherein the measuring procedure is extended to a higher number of frequencies, for instance provided by a conventional cell neighbour list, if none of the frequencies or frequency and scrambling code combinations included in the frequency list fulfils the at least one requirement.

14. The method according to any one of the preceding claims wherein said stored data is used in a situation in which conventional handover or cell reselection procedures fail.

15. The method according to any one of the preceding claims wherein during a handover or cell reselection procedure a conventional neighbour list is compared to a frequency list, and where applicable scrambling code list, derived from the stored data and measurements of the receive signal level and quality of neighbouring cells are only performed by the mobile terminal for matching frequencies.

16. The method according to claim 15 wherein if the received signal level and quality of any of the measured frequencies exceeds at least one defined threshold the cell of the identified frequency, and where applicable scrambling code, shall be proposed as a target cell for handover or cell reselection and the network shall be informed about this proposal.

17. The method according to any of claims 1 to 12 or 15, 16 wherein a decision for a suitable frequency/scrambling code/cell for a handover or cell reselection procedure is made autonomously by the mobile terminal.

18. The method according to any one of the preceding claims wherein the collection of data in the local database is manually initated and terminated by the user via a mobile application.

19. A mobile cellular network comprising means for performing the method according to any one of the preceding claims.

20. A mobile terminal comprising means for performing the method according to any one of claims 1 to 18 within a mobile cellular network device.

**Patentansprüche**

1. Verfahren zum Optimieren von Mobilitätsverwaltung in einem Mobilfunknetz mit mindestens einem mobilen Endgerät, wobei das mobile Endgerät folgende Schritte durchgeführt:

  i. Messen mindestens eines für Signalempfang relevanten Parameters, insbesondere der Empfangssignalstärke und/oder der Empfangssignalqualität, während eines Übergabe- und/oder Zellenneuauswahlvorgangs für eine Anzahl von Zellen, insbesondere für alle benachbarten Zellen und/oder die bedienende Zelle,
  ii. Kombinieren dieser Daten mit Informationen über die physikalische Frequenz, bei der sie ermittelt wurden, und gegebenenfalls mit dem verwendeten Scrambling-Code,
  iii. Speichern der Messdaten in einer Datenbank für künftige Nutzung,

  **dadurch gekennzeichnet, dass**
  das Netz und/oder das Nutzerendgerät für einen möglichen Übergabe- und/oder Zellenneuauswahlvorgang und/oder eine PLMN-Wahl auf die gespeicherten Messdaten zum Erzeugen einer Frequenzliste, die relevante Frequenzen und gegebenenfalls Scrambling-Codes von benachbarten Zellen des jeweiligen mobilen Endgeräts umfasst, zugreift und diese analysiert.

2. Verfahren nach Anspruch 1, wobei die Messdaten in einer lokalen und/oder globalen Datenbank gespeichert werden und die lokalen und globalen Datenbanken bevorzugt regelmäßig ausgelöst und/oder ereignisgesteuert ausgelöst und/oder in Echtzeit synchronisiert werden.

3. Verfahren nach Anspruch 2, wobei jedem mobilen Endgerät mindestens eine lokale Datenbank zugeordnet ist und von jedem mobilen Endgerät oder vielmehr jeder lokalen Datenbank auf die globale Datenbank zugegriffen werden kann.

4. Verfahren nach einem der vorhergehenden Ansprüche, wobei zusammen mit den Messdaten zusätzliche Informationen gespeichert werden, zum Beispiel Informationen über die aktuelle geographische Position des mobilen Endgeräts und/oder den aktuellen Messzeitpunkt und/oder die aktuell verwendete Funkzugangstechnologie und/oder die aktuell gescannte Frequenz und/oder den aktuell verwendeten Scrambling-Code und/oder den aktuell besten Server und/oder alle qualitätsbezogene Information im aktiven Modus und/oder Informationen über das ereignisgesteuerte Auslösen der Messung.

5. Verfahren nach einem der vorhergehenden Ansprüche, wobei die gespeicherten Messdaten und/oder die zusätzlichen Informationen, die in der lokalen Datenbank gespeichert sind, von einem jeweiligen mobilen Endgerät für mögliche Übergabe- und/oder Zellenneuauswahlvorgänge und/oder von einem roamenden mobilen Endgerät für PLMN-Wahl verwendet werden.

6. Verfahren nach einem der vorhergehenden Ansprüche, wobei die Frequenz- und Scrambling-Code-Liste aus einer Messung gewonnen wird, die von diesem und/oder einem beliebigen anderen mobilen Endgerät in der Vergangenheit durchgeführt wurde.

7. Verfahren nach einem der vorhergehenden Ansprüche, wobei von einem mobilen Endgerät durchgeführte und in seiner lokalen Datenbank gespeicherte Messungen bevorzugt mittels der Luftschnittstelle zu dem mobilen Netz übertragen und in einer globalen Datenbank, die mit Netzinstanzen des mobilen Netzes verbunden ist, gespeichert werden.

8. Verfahren nach einem der vorhergehenden Ansprüche, wobei relevante Daten bevorzugt mittels der Luftschnittstelle von der globalen Datenbank zu mehreren mobilen Endgeräten übertragen werden.

9. Verfahren nach einem der vorhergehenden Ansprüche, wobei relevante Daten mittels einer physikalischen oder logischen Schnittstelle von der lokalen Datenbank eines Endgeräts zu der lokalen Datenbank eines anderen Endgeräts übertragen werden.

10. Verfahren nach einem der vorhergehenden Ansprüche, wobei während eines Übergabe- und/oder Zellenneuauswahlvorgangs und/oder einer PLMN-Wahl das mobile Endgerät bei allen oder mindestens einigen der Frequenzen und gegebenenfalls Scrambling-Codes, die in der Frequenzliste enthalten sind, mit dem Messen der Empfangssignalstärke und -qualität beginnt.

11. Verfahren nach Anspruch 10, wobei die gemessene Empfangssignalstärke und -qualität für jede Frequenz der Frequenzliste und gegebenenfalls die Frequenz- und Scrambling-Code-Kombination mit mindestens einem Sollschwellenwertpaar verglichen wird und, wenn die Empfangssignalstärke und Empfangssignalqualität das mindestens eine Paar von Schwellenwerten übersteigt, die Zelle/PLMN der identifizierten Frequenz und gegebenenfalls des Scrambling-Codes als Zielzelle für eine Übergabe und/oder einen Zellenneuauswahlvorgang oder als Ziel-PLMN für Roaming vorgeschlagen wird.

12. Verfahren nach Anspruch 11, wobei die am besten geeignete Frequenz oder Kombination von Frequenz und Scrambling-Code gewählt wird, wenn mehr als ein Kandidat die mindestens eine Anforderung erfüllt, insbesondere durch Einstufen der geeigneten Frequenzen und gegebenenfalls von Frequenz- und Scrambling-Code-Kombinationen und Wählen der besten Frequenz oder Frequenz- und Scrambling-Code-Kombination abhängig von gewichteten Stärke- und Qualitätskriterien.

13. Verfahren nach Anspruch 11, wobei der Messvorgang auf eine größere Anzahl von Frequenzen, die zum Beispiel durch eine herkömmlichen Zellennachbarliste vorgesehen wird, ausgeweitet wird, wenn keine der Frequenzen oder Frequenz- und Scrambling-Code-Kombinationen, die in der Frequenzliste enthalten sind, die mindestens eine Anforderung erfüllt.

14. Verfahren nach einem der vorhergehenden Ansprüche, wobei die gespeicherten Daten in einer Situation verwendet werden, in der herkömmliche Übergabe- und/oder Zellenneuauswahlvorgänge scheitern.

15. Verfahren nach einem der vorhergehenden Ansprüche, wobei während eines Übergabe- oder Zellenneuauswahlvorgangs eine herkömmliche Nachbarliste mit einer Frequenzliste und gegebenenfalls einer Scrambling-Code-Liste, die aus den gespeicherten Daten erhalten wurde, verglichen wird und Messungen der Empfangssignalstärke und -qualität von benachbarten Zellen von dem mobilen Endgerät nur für übereinstimmende Frequenzen durchgeführt werden.

16. Verfahren nach Anspruch 15, wobei, wenn die Empfangssignalstärke und -qualität einer der gemessenen Frequenzen mindestens einen festgelegten Schwellenwert übersteigt, die Zelle der identifizierten Frequenz und gegebenenfalls des Scrambling-Codes als Zielzelle für eine Übergabe oder Zellenneuauswahl vorgeschlagen wird und das Netz über diese Vorschlag informiert wird.

17. Verfahren nach einem der Ansprüche 1 bis 12 oder 15, 16, wobei eine Entscheidung für eine(n) geeignete(n) Frequenz/Scrambling-Code/Zelle für einen Übergabe- oder Zellenneuauswahlvorgang von dem mobilen Endgerät autonom vorgenommen wird.

18. Verfahren nach einem der vorhergehenden Ansprüche, wobei die Erfassung von Daten in der lokalen Datenbank von dem Nutzer mittels einer mobilen Applikation manuell eingeleitet und beendet wird.

**19.** Mobilfunknetz, welches Mittel zum Durchführen des Verfahrens nach einem der vorhergehenden Ansprüche umfasst.

**20.** Mobiles Endgerät, welches Mittel zum Durchführen des Verfahrens nach einem der Ansprüche 1 bis 18 in einer Mobilfunknetzvorrichtung umfasst.

**Revendications**

**1.** Procédé pour optimiser la gestion de la mobilité dans un réseau cellulaire avec au moins un terminal mobile, le terminal mobile effectuant les étapes consistant à :

i. mesurer au moins un paramètre pertinent d'un signal de réception, en particulier le niveau du signal de réception et/ou la qualité du signal de réception, pendant une procédure de transfert intercellulaire et/ou de resélection de cellule pour un certain nombre de cellules, en particulier pour toutes les cellules voisines et/ou la cellule de desserte,
ii. combiner ces données avec des informations concernant la fréquence physique à laquelle elles ont été déterminées, et si applicable avec le code de brouillage utilisé,
iii. enregistrer lesdites données de mesure dans une base de données pour utilisation future
**caractérisé en ce que**
le réseau et/ou le terminal utilisateur accède aux données de mesure enregistrées et les analyse afin de générer une liste de fréquences comportant des fréquences pertinentes, et si applicable des codes de brouillage de cellules voisines du terminal mobile respectif, pour une procédure possible de transfert intercellulaire et/ou de resélection de cellule et/ou une sélection de RMTP.

**2.** Procédé selon la revendication 1, dans lequel lesdites données de mesure sont enregistrées dans une base de données locale et/ou globale et de préférence les bases de données locale et globale sont déclenchées périodiquement et/ou par un événement et/ou synchronisées en temps réel.

**3.** Procédé selon la revendication 2, dans lequel au moins une base de données locale est attribuée à chaque terminal mobile et la base de donnée globale est accessible à chaque terminal mobile ou plutôt chaque base de données locale.

**4.** Procédé selon l'une quelconque des revendications précédentes, dans lequel des informations supplémentaires sont enregistrées conjointement avec les données de mesure, par exemple des informations concernant la position géographique actuelle du terminal mobile et/ou le temps actuel de la mesure et/ou la technologie d'accès radio actuellement utilisée et/ou la fréquence actuellement scrutée et/ou le code de brouillage actuellement utilisé et/ou le meilleur serveur actuel et/ou toute information relative à la qualité en mode actif et/ou des informations concernant l'événement déclenchant la mesure.

**5.** Procédé selon l'une quelconque des revendications précédentes, dans lequel lesdites données de mesure enregistrées et/ou lesdites informations supplémentaires enregistrées dans la base de données locale sont utilisées par un terminal mobile respectif pour des procédures possibles de transfert intercellulaire et/ou de resélection de cellule et/ou par un terminal mobile itinérant pour une sélection de RMTP.

**6.** Procédé selon l'une quelconque des revendications précédentes, dans lequel la liste de fréquences et de codes de brouillage est dérivée d'une mesure effectuée par ce terminal mobile et/ou n'importe quel autre terminal mobile dans le passé.

**7.** Procédé selon l'une quelconque des revendications précédentes, dans lequel des mesures effectuées par un terminal mobile et enregistrées dans sa base de données locale sont transférées de préférence par le biais de l'interface radio au réseau mobile et enregistrées dans une base de données globale qui est connectée à des entités de réseau du réseau mobile.

**8.** Procédé selon l'une quelconque des revendications précédentes, dans lequel des données pertinentes sont transférées de la base de données globale à une pluralité de terminaux mobiles de préférence par le biais de l'interface radio.

9. Procédé selon l'une quelconque des revendications précédentes, dans lequel des données pertinentes sont transférées de la base de données locale d'un terminal à la base de données locale d'un autre terminal par le biais d'une quelconque interface physique ou logique.

10. Procédé selon l'une quelconque des revendications précédentes, dans lequel pendant une procédure de transfert intercellulaire et/ou de resélection de cellule et/ou une sélection de RMTP, le terminal mobile commence à mesurer le niveau et la qualité du signal reçu sur toutes les fréquences ou au moins quelques-unes des fréquences, et si applicable les codes de brouillage inclus dans ladite liste de fréquences.

11. Procédé selon la revendication 10, dans lequel le niveau et la qualité mesurés du signal reçu pour chaque fréquence de la liste de fréquences, et si applicable chaque combinaison de fréquence et de code de brouillage, sont comparés à au moins une paire de seuils cibles et si le niveau de signal et la qualité de signal reçu dépassent l'au moins une paire de seuils la cellule/le RMTP de la fréquence identifiée, et si applicable le code de brouillage, est proposé(e) en tant que cellule cible pour une procédure de transfert intercellulaire ou de resélection de cellule ou en tant que RMTP cible pour l'itinérance.

12. Procédé selon la revendication 11, dans lequel la fréquence ou la combinaison de fréquence et de code de brouillage la mieux adaptée est sélectionnée si plus d'un candidat remplit l'au moins une exigence, en particulier en classant les fréquences adaptées, et si applicable les combinaisons de fréquence et de code de brouillage, et en sélectionnant la meilleure fréquence ou combinaison de fréquence et de code de brouillage en fonction de critères de niveau et de qualité pondérés.

13. Procédé selon la revendication 11, dans lequel la procédure de mesure est étendue à un nombre plus élevé de fréquences, par exemple fournies par une liste de voisines de cellule conventionnelle, si aucune des fréquences ou combinaisons de fréquence et de code de brouillage comprises dans la liste de fréquences ne remplit l'au moins une exigence.

14. Procédé selon l'une quelconque des revendications précédentes, dans lequel lesdites données enregistrées sont utilisées dans une situation dans laquelle des procédures conventionnelles de transfert intercellulaire ou de resélection de cellule sont un échec.

15. Procédé selon l'une quelconque des revendications précédentes, dans lequel, pendant une procédure de transfert intercellulaire ou de resélection de cellule, une liste de voisines conventionnelle est comparée à une liste de fréquences, et si applicable une liste de codes de brouillage, dérivée des données enregistrées, et des mesures du niveau et de la qualité du signal de réception de cellules voisines sont effectuées uniquement par le terminal mobile pour des fréquences correspondantes.

16. Procédé selon la revendication 15, dans lequel, si le niveau et la qualité de signal reçu d'une quelconque des fréquences mesurées dépasse au moins un seuil défini, la cellule de la fréquence identifiée, et si applicable du code de brouillage, doit être proposée comme une cellule cible pour un transfert intercellulaire ou une resélection de cellule et le réseau doit être informé de cette proposition.

17. Procédé selon l'une quelconque des revendications 1 à 12 ou 15, 16, dans lequel une décision concernant une fréquence/un code de brouillage/une cellule adapté(e) pour une procédure de transfert intercellulaire ou de resélection de cellule est prise de manière autonome par le terminal mobile.

18. Procédé selon l'une quelconque des revendications précédentes, dans lequel la collecte de données dans la base de données locale est initiée manuellement et terminée par l'utilisateur par le biais d'une application mobile.

19. Réseau cellulaire mobile comprenant des moyens pour exécuter le procédé selon l'une quelconque des revendications précédentes.

20. Terminal mobile comprenant des moyens pour exécuter le procédé selon l'une quelconque des revendications 1 à 18 dans un dispositif de réseau cellulaire mobile.

**Figur 1**

Figure 2

## Figure 3

```
class measurements
{
        int technology;              // coded value of radio access technology
        int frequency;               // coded value of scanned physical frequency
        float positionLatitude;      // GPS position Latitude
        float positionLongitude;     // GPS position Longitude
        float positionAltitude;      // GPS position Altitude


        ...

        int receiveLevel;            // measured receive level [dBm]
        float receiveQual;           // estimated receive quality [dB]
};
```

EP 2 773 149 B1

# Figure 4

RAN sends the values for the thresholds THR_1 and THR_2 to the terminal — 400

For handover measurements the terminal identifies the frequencies / scrambling codes from information of the local data base for the corresponding geographical location of the terminal. — 410

The terminal starts measurements of receive level and quality for the frequencies / scrambling codes of the generated list. — 420

Are the conditions (receive level > THR_1) AND (receive quality > THR_2) fulfilled for any of the frequencies / scrambling codes included in the list? — 430

yes

Execute ranking if the conditions are fulfilled for more than one frequency and/or scrambling code. — 440

Select the best suited frequency and/or scrambling code of the list for cell change. — 450

no — 460

Extend the list and perform measurements on other frequencies / scrambling codes previously not included in the list.

EP 2 773 149 B1

18

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- US 20110177819 A1

- FR 12

### Non-patent literature cited in the description

- UE Procedures in Idle Mode and Procedures for Cell Reselection in Connected Mode (3GPP TS 25.304 version 5.2.0 Release 5). *ETSI TS 125 304 V5.2.0,* 2002, http://www.etsi.org/deliver/etsi_ts/125300_125399/125304/05.02.00_60/ts_125304v 050200p.pdf
- **M. ANAS ; F. D. CALABRESE ; P.-E. OSTLING ; K. I. PEDERSEN ; P. E. MOGENSEN.** Performance Analysis of Handover Measurements and Layer 3 Filtering for UTRAN LTE. *proceedings of 18th Annual IEEE International Symposium on Personal, Indoor and Mobile Radio Communications(PIMRC'07), http://vbn.aau.dk/files/12841511/PIMRC2007_Hando ver.pdf*

- **H. HOLMA ; A. TOSKALA.** WCDMA for UMTS: HSPA Evolution and LTE. John Wiley &Sons, 2010
- Requirements for support of radio resource management (FDD) (Release 9). *3GPP TS 25.133 V9.2.0,* 2009, http://www.3gpp.org
- **M. ANAS ; F. D. CALABRESE ; P.-E. ÖSTLING ; K. I. PEDERSEN ; P. E. MOGENSEN.** Performance Analysis of Handover Measurements and Layer 3 Filtering for UTRAN LTE. *proceedings of 18th Annual IEEE International Symposium on Personal, Indoor and Mobile Radio Communications (PIMRC'07), http://vbn.aau.dk/files/12841511/PIMRC2007_Hando ver.pdf*